# EUROPEAN PATENT SPECIFICATION

(11) **EP 4 129 065 B1**
(45) Date of publication and mention of the grant of the patent: **11.06.2025**
(21) Application number: 21775596.6
(22) Date of filing: 25.03.2021
(51) Int. Cl.: A01N 43/10, A01M 29/30, A01P 17/00, A01N 43/12

(54) **MAMMAL REPELLENT**
SÄUGETIERABWEHRMITTEL
RÉPULSIF POUR MAMMIFÈRES

(30) Priority: 25.03.2020 JP 2020054031
(43) Date of publication of application: 08.02.2023
(73) Proprietor: Scent Science International Inc., Ibaraki-shi, Osaka, 567-0085 (JP)
(72) Inventor: KOBAYAKAWA, Ko, Ibaraki-shi, Osaka 567-0085 (JP); KOBAYAKAWA, Reiko, Ibaraki-shi, Osaka 567-0085 (JP)
(74) Representative: Weickmann & Weickmann PartmbB
(86) International application number: PCT/JP2021/012591
(87) International publication number: WO 2021/193834

(56) References cited:
- WO-A1-2011/096575
- WO-A1-2019/177142
- JP-A- 2018 100 251
- US-A- 5 672 352

## Description

### [Technical Field]

The present invention relates to a repellent for mammals containing a substituted thiophene compound that induces an innate fear behavior in mammals as an active ingredient.

### [Background Art]

Animal damages caused by mammals include intrusion of homes, stores, warehouses, and farmland by rodents, bite damage on electric wires and communication cables, intrusion of farmland by deer, wild boars, monkeys, and moles, invasion of gardens and flowerbeds by cats, and the like. They cause various economic and livelihood losses in human society (Non-Patent Literatures 1, 2). Furthermore, the intrusion of harmful wild animals into the living environment of humans and domestic animals mediates infectious diseases. Although various repellents are disclosed as countermeasures against these harmful wild animals (Patent Literatures 1, 2, Non-Patent Literatures 3, 4), the occurrence of damage has not been prevented. Thus, there is a demand for repellents having further excellent properties, and compounds to be the active ingredient of a repellent.

Empirically, it has been considered that rodents and other animals exhibit avoidance behaviors toward odors emitted by carnivorous animals that may harm them. According to this idea, lion feces, wolf urine, and the like are used as repellents. Among the components of these natural substances derived from natural predators, what kind of odor molecule is active and by what mechanism it induces avoidance behaviors are not clear. In order to develop repellents that can be industrially produced with stable quality, it is necessary to determine components with excellent activity to induce avoidance behaviors in harmful wild animals. In addition, elucidation of the mechanism of inducing avoidance behaviors is effective in improving the property of repellent components, identifying effective animal species, and confirming safety.

The present inventors and others have shown that odor molecules such as thiazolines and benzothiazolines containing S and N in the cyclic skeleton, pyrazines containing only N in the cyclic skeleton, and the like can be utilized as an active ingredient of repellents for rodents and other animals (Patent Literatures 3, 4, 5). The present inventors have further shown that the odor molecules of thiazolines have the activity to induce innate fear behaviors and, for this reason, habituation does not occur even when odor stimulation is given repeatedly (Patent Literature 3). Therefore, innate fear-inducing repellents using odor molecules of thiazolines and the like are characterized by the fact that habituation is difficult to occur and the effect is long-lasting.

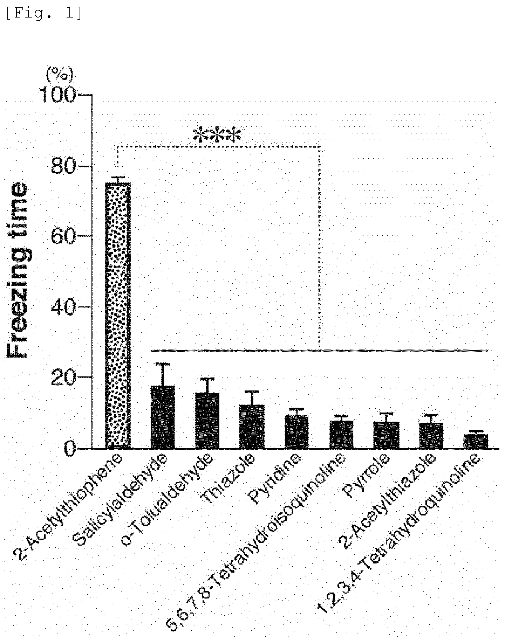

On the other hand, it is known that certain thiophene compounds containing only S in the cyclic skeleton act as repellent components for birds (Patent Literature 6, Non-Patent Literature 5). However, according to the present invention, it was clarified that many of the odor molecules, which have been shown to exhibit repellent activities against birds in these Literatures, have no or only weak activity of inducing freezing behavior in mice (Fig. 1). It has also been reported that 2,4-dimethyl-thiazole has an activity to induce freezing behavior in mice but does not show repellent activity in birds (Non-Patent Literature 5). These results indicate that effective repellent active ingredients are clearly different between birds and mammals.

In parallel with identifying active ingredients that induce avoidance behaviors in harmful wild animals, by analyzing genetically-engineered mice, the present inventors found for the first time in the world that a specific olfactory neural pathway in the nasal cavity regulates odor-induced innate fear behaviors in mice (Non-Patent Literature 6). Furthermore, using a forward genetics screening method in mice, the present inventors unexpectedly clarified that the Trpa1 receptor in the trigeminal nerve pathway, rather than olfactory receptor genes, is the gene that plays a major role in the induction of odor-induced innate fear behaviors (Non-Patent Literature 7).

Importantly, in the Trpa1 knockout mice, not only the fear behaviors toward odor molecules of thiazolines, but also the fear behaviors toward natural odor mixture emitted by snake skins that do not contain odor molecules of thiazolines as components were lost (Non-Patent Literature 7). To date, no receptor genes have been reported that controls the induction of fear behavior toward multiple types of odor molecules. Therefore, the Trpa1 gene is considered to be the most important gene controlling the fear behavior against odor molecules.

Since the amino acid sequences encoded by olfactory receptor and Trpa1 genes are greatly different among animal species compared to other genes, the kind of stimulation that activates these receptors may also vary among animal species. In fact, mouse TRPA1 and bird TRPA1 show different response specificities to odor molecules (Non-Patent Literature 8). In addition, TRPA1 also has the function of sensing the temperature of the external world; however, the reaction temperature thereof is reversed: low temperature in mammals and high temperature in birds (Non-Patent Literature 8). That is, judging from the property of the TRPA1 receptor, which is the main target for inducing avoidance behaviors in harmful animals, it is suggested that the repellent active ingredients differ between mammals and birds.

Therefore, in order to develop a repellent that is effective for harmful mammals, it is necessary to develop a repellent active ingredient effective for mammals.

### [Citation List]

### [Patent Literature]

[PTL 1]
   JP-A-2004-196684
[PTL 2]
   JP-A-63-239206
[PTL 3]
   JP-B-5350496
[PTL 4]
   JP-A-2016-003202
[PTL 5]
   WO2014/133156
[PTL 6]
   US5672352A

[Non Patent Literature]

[NPL 1]
   Pest Manag. Sci. 73 (12): 2397-2402, 2017
[NPL 2]
   https://www.maff.go.jp/j/wpaper/w_maff/h24_h/trend/part1/chap4/ c4_1_03.html
[NPL 3]
   J Chem Ecol 23 (8): 2049-2057, 1997
[NPL 4]
   Arch. Environ. Contam. Toxicol. 14, 111-129, 1985
[NPL 5]
   Arch. Environ. Contam. Toxicol. 12, 355-382, 1983
[NPL 6]
   Nature 450, 503-508, 2007
[NPL 7]
   Nat Commun 9, 2041, 2018
[NPL 8]
   Mol. Biol. Evol. 31, 708-722, 2014

### [Summary of Invention]

### [Technical Problem]

An object of the present invention is to provide a repelling method for mammals, containing a repellent active ingredient effective for mammals. The repellents mentioned below are to be construed as used in the present invention but are not claimed *per se.*

### [Solution to Problem]

The present inventors have conducted studies of various compounds in an attempt to solve the aforementioned problems and found that a compound represented by the following formula (1) shows an excellent repellent activity for mammals by inducing an innate fear behavior in mammals, and completed the present invention.

Therefore, the present invention relates to the following.
[1] A repellent for mammals comprising, as an active ingredient, at least one selected from a thiophene compound represented by the formula (Ia): 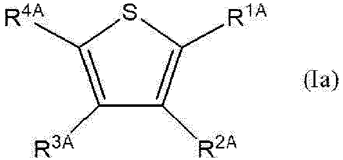
   wherein R^{1A}, R^{2A}, R^{3A}, and R^{4A} are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group;
   R^{3A} and R^{4A} are optionally bonded to each other to form a benzene ring together with carbon atoms bonded thereto;
   provided that R^{1A}, R^{2A}, R^{3A}, and R^{4A} are not hydrogen atoms at the same time,
   and a salt thereof.
[2] The repellent of [1], wherein R^{1A}, R^{2A}, R^{3A}, and R^{4A} are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group;
   R^{3A} and R^{4A} are optionally bonded to each other to form a benzene ring together with carbon atoms bonded thereto;
   provided that R^{1A}, R^{2A}, R^{3A}, and R^{4A} are not hydrogen atoms at the same time.
[3] The repellent of [1], wherein the compound represented by the formula (Ia) is a compound represented by the formula (Ib) or (Ic): 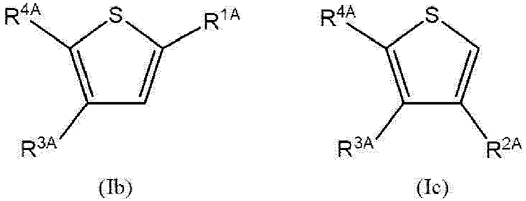 wherein each symbol is as defined in [1], R^{1A}, R^{3A}, and R^{4A} in the formula (Ib) are not hydrogen atoms at the same time, and R^{2A}, R^{3A}, and R^{4A} in the formula (Ic) are not hydrogen atoms at the same time.
[4] The repellent of [1], wherein the thiophene compound represented by the formula (Ia) is a compound represented by the formula (1): 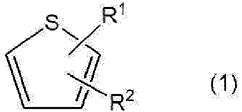 wherein R¹ and R² are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group; provided that R¹ and R² are not hydrogen atoms at the same time.
[5] The repellent of [4], wherein R¹ and R² are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group; provided that R¹ and R² are not hydrogen atoms at the same time.
[5A] The repellent of [5], wherein R¹ and R² are each independently a hydrogen atom; a formyl group; a C₁₋₆ alkyl-carbonyl group; a C₁₋₆ alkoxycarbonyl group; a halogen atom; or a C₁₋₆ alkyl group optionally substituted by a hydroxy group or an amino group; provided that R¹ and R² are not hydrogen atoms at the same time.
[6] The repellent of [4], wherein the compound represented by the formula (1) is a compound represented by the formula (2) or (3): 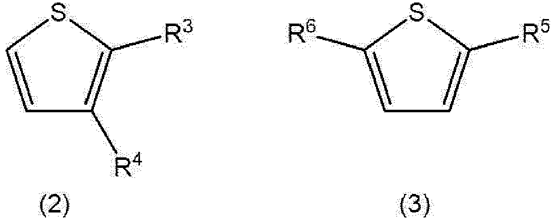 wherein R³, R⁴, R⁵, and R⁶ are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group; provided that R³ and R⁴ are not hydrogen atoms at the same time, and R⁵ and R⁶ are not hydrogen atoms at the same time.
[6A] The repellent of [6], wherein R³, R⁴, R⁵, and R⁶ are each independently a hydrogen atom; a formyl group; a C₁₋₆ alkyl-carbonyl group; a C₁₋₆ alkoxycarbonyl group; a halogen atom; or a C₁₋₆ alkyl group optionally substituted by a hydroxy group or an amino group; provided that R³ and R⁴ are not hydrogen atoms at the same time, and R⁵ and R⁶ are not hydrogen atoms at the same time.
[7] The repellent of [6] or [6A], wherein the compound represented by the formula (1) is a compound represented by the formula (2).
[8] The repellent of [7], wherein one of R³ and R⁴ is a hydrogen atom, and the other is a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group.
[8A] The repellent of [8], wherein one of R³ and R⁴ is a hydrogen atom, and the other is a formyl group; a C₁₋₆ alkyl-carbonyl group; a C₁₋₆ alkoxycarbonyl group; a halogen atom; or a C₁₋₆ alkyl group optionally substituted by a hydroxy group or an amino group.
[9] The repellent of [7], wherein one of R³ and R⁴ is a hydrogen atom, and the other is a C₁₋₆ alkyl-carbonyl group or a C₁₋₆ alkoxycarbonyl group.
[10] The repellent of [6] or [6A], wherein the compound represented by the formula (1) is a compound represented by the formula (3).
[11] The repellent of [10], wherein R⁵ and R⁶ are each independently a C₁₋₆ alkyl group.
[12] The repellent of [1], wherein the compound represented by the formula (Ia) is selected from
   2-acetylthiophene,
   methyl 2-thiophenecarboxylate,
   ethyl 2-thiophenecarboxylate,
   2-propionylthiophene,
   methyl thiophene-3-carboxylate,
   3-chlorothiophene,
   3-methylthiophene-2-carboxaldehyde,
   2-propylthiophene,
   2-(2-aminoethyl)thiophene,
   2-ethylthiophene,
   2-chloro-3-methylthiophene,
   3-methylthiophene,
   2-thiopheneethanol,
   2,5-dimethylthiophene,
   3-thiophenemethanol,
   2-thiophenecarboxaldehyde,
   3-acetyl-2,5-dimethylthiophene,
   2-methoxythiophene,
   2-bromothiophene,
   2-thiophenemethanethiol,
   2-pentylthiophene, and
   3-methylbenzo[b]thiophene.
[13] The repellent of [1], wherein the compound represented by the formula (Ia) is selected from
   2-acetylthiophene,
   methyl 2-thiophenecarboxylate,
   ethyl 2-thiophenecarboxylate,
   2-propionylthiophene,
   methyl thiophene-3-carboxylate, and
   3-acetyl-2,5-dimethylthiophene.
[14] A method for repelling a mammal, comprising placing at least one selected from a thiophene compound represented by the formula (Ia): 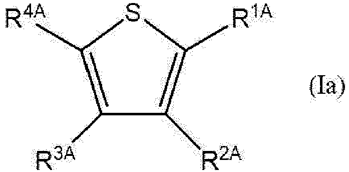
   wherein R^{1A}, R^{2A}, R^{3A}, and R^{4A} are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group;
   R^{3A} and R^{4A} are optionally bonded to each other to form a benzene ring together with carbon atoms bonded thereto; provided that R^{1A}, R^{2A}, R^{3A}, and R^{4A} are not hydrogen atoms at the same time,
   and a salt thereof in a space from which the mammal is to be repelled.
[15] The method of [14], wherein R^{1A}, R^{2A}, R^{3A}, and R^{4A} are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group;
   R^{3A} and R^{4A} are optionally bonded to each other to form a benzene ring together with carbon atoms bonded thereto; provided that R^{1A}, R^{2A}, R^{3A}, and R^{4A} are not hydrogen atoms at the same time.
[16] The method of [14], wherein the compound represented by the formula (Ia) is a compound represented by the formula (Ib) or (Ic): 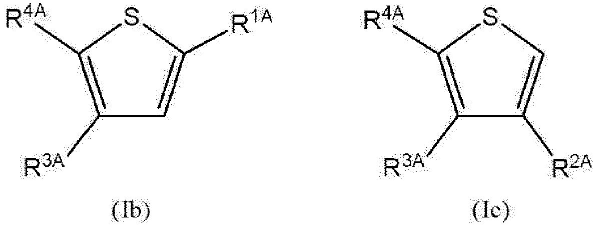 wherein each symbol is as defined in [1], R^{1A}, R^{3A}, and R^{4A} in the formula (Ib) are not hydrogen atoms at the same time, and R^{2A}, R^{3A}, and R^{4A} in the formula (Ic) are not hydrogen atoms at the same time.
[17] The method of [14], wherein the thiophene compound represented by the formula (Ia) is a compound represented by the formula (1): [0026] 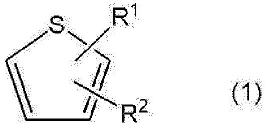 wherein R¹ and R² are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group; provided that R¹ and R² are not hydrogen atoms at the same time.
[18] The method of [17], wherein R¹ and R² are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group; provided that R¹ and R² are not hydrogen atoms at the same time.
[18A] The method of [18], wherein R¹ and R² are each independently a hydrogen atom; a formyl group; a C₁₋₆ alkyl-carbonyl group; a C₁₋₆ alkoxycarbonyl group; a halogen atom; or a C₁₋₆ alkyl group optionally substituted by a hydroxy group or an amino group; provided that R¹ and R² are not hydrogen atoms at the same time.
[19] The method of [17], wherein the compound represented by the formula (1) is a compound represented by the formula (2) or (3): 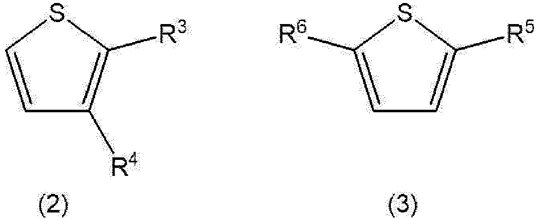 wherein R³, R⁴, R⁵, and R⁶ are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group; provided that R³ and R⁴ are not hydrogen atoms at the same time, and R⁵ and R⁶ are not hydrogen atoms at the same time.
[19A] The method of [19], wherein R³, R⁴, R⁵, and R⁶ are each independently a hydrogen atom; a formyl group; a C₁₋₆ alkyl-carbonyl group; a C₁₋₆ alkoxycarbonyl group; a halogen atom; or a C₁₋₆ alkyl group optionally substituted by a hydroxy group or an amino group; provided that R³ and R⁴ are not hydrogen atoms at the same time, and R⁵ and R⁶ are not hydrogen atoms at the same time.
[20] The method of [19] or [19A], wherein the compound represented by the formula (1) is a compound represented by the formula (2).
[21] The method of [20], wherein one of R³ and R⁴ is a hydrogen atom, and the other is a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group.
[21A] The method of [21], wherein one of R³ and R⁴ is a hydrogen atom, and the other is a formyl group; a C₁₋₆ alkyl-carbonyl group; a C₁₋₆ alkoxycarbonyl group; a halogen atom; or a C₁₋₆ alkyl group optionally substituted by a hydroxy group or an amino group.
[22] The method of [20], wherein one of R³ and R⁴ is a hydrogen atom, and the other is a C₁₋₆ alkyl-carbonyl group or a C₁₋₆ alkoxycarbonyl group.
[23] The method of [19] or [19A], wherein the compound represented by the formula (1) is a compound represented by the formula (3).
[24] The method of [23], wherein R⁵ and R⁶ are each independently a C₁₋₆ alkyl group.
[25] The method of [14], wherein the compound represented by the formula (Ia) is selected from the compounds recited in [12].
[26] The method of [14], wherein the compound represented by the formula (Ia) is selected from the compounds recited in [13].
[27] Use of at least one selected from a thiophene compound represented by the formula (Ia): 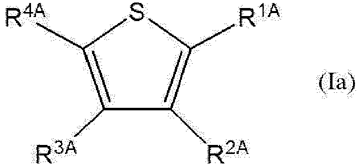
   wherein R^{1A}, R^{2A}, R^{3A}, and R^{4A} are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group;
   R^{3A} and R^{4A} are optionally bonded to each other to form a benzene ring together with carbon atoms bonded thereto; provided that R^{1A}, R^{2A}, R^{3A}, and R^{4A} are not hydrogen atoms at the same time,
   and a salt thereof as a repellent for mammals.
[27A] The use of [27], wherein the thiophene compound represented by the formula (Ia) is a compound represented by the formula (1): 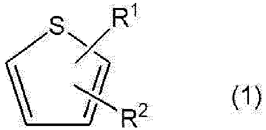 wherein R¹ and R² are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group; provided that R¹ and R² are not hydrogen atoms at the same time.

### [Advantageous Effects of Invention]

According to the present invention, a repellent having an excellent repellent action on harmful mammals can be provided. Since the repellent of the present invention has an odor that induces innate fear behavior in mammals, the animals do not show acclimation to the odor of the repellent of the present invention. Thus, the possibility that the effect of the repellent decreases by habituation is low.

In addition, some of the thiazole compounds conventionally known as animal repellents emit offensive odors and are difficult to handle as repellents. A substituted thiophene compound such as 2-acetylthiophene, which is an active ingredient of the repellent of the present invention, is advantageous in that it does not have an offensive odor and is easy to handle as a repellent for mammals.

### [Brief Description of Drawings]

[Fig. 1]
   Fig. 1 shows the test results of the freezing behavior of mice exposed to certain concentrations of various compounds with respect to odor molecules that have been reported to have a repellent effect on birds.
[Fig. 2]

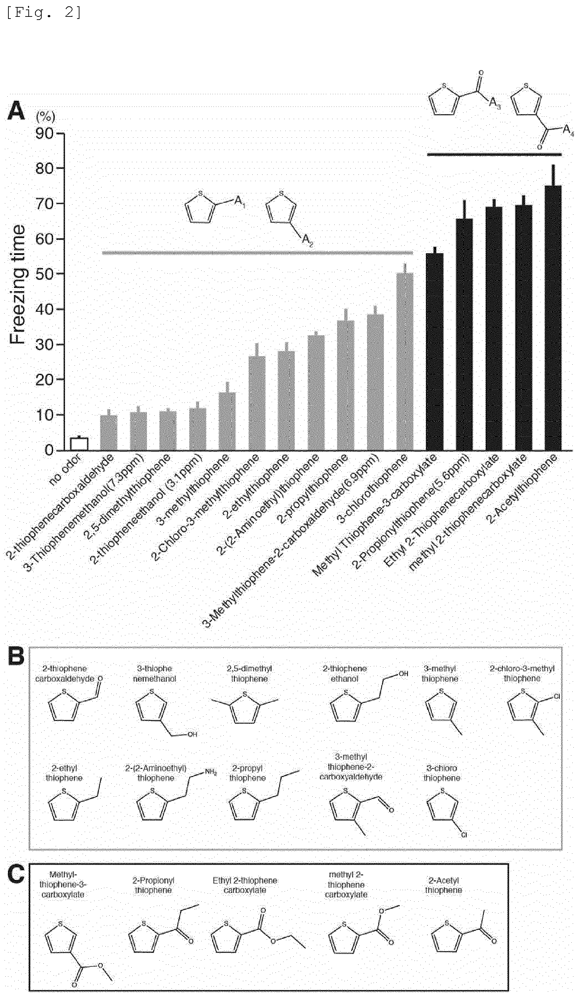

   Fig. 2: A shows the test results of the freezing behavior of mice exposed to certain concentrations of various thiophene analogous compounds. B and C show the structural formulas of the test compounds.
[Fig. 3]

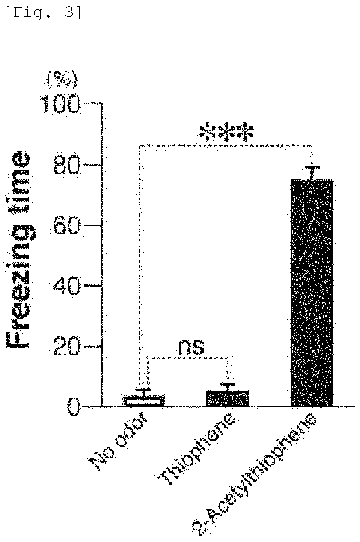

   Fig. 3 shows the test results of the freezing behavior of mice exposed to certain concentrations of thiophene and 2-acetylthiophene.
[Fig. 4]

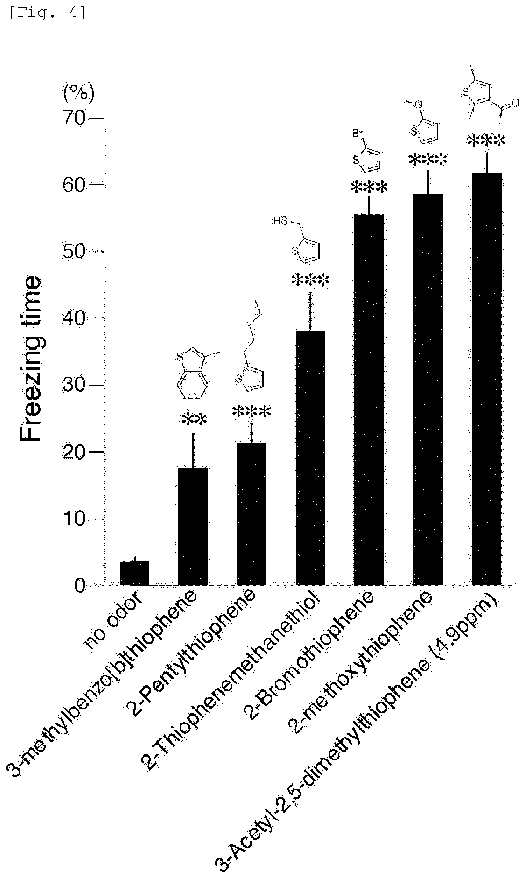

   Fig. 4 shows the test results of the freezing behavior of mice exposed to certain concentrations of various thiophene analogous compounds.

### [Description of Embodiments]

Examples of the "acyl group" used here include a formyl group and a C₁₋₆ alkyl-carbonyl group (preferably C₁₋₄ alkyl-carbonyl group). Examples of the C₁₋₆ alkyl-carbonyl group include, but are not limited to, acetyl group, propionyl group, butyryl group, isobutyryl group, valeryl group, hexanoyl group and the like.

The term "carboxyl group" used here shows a -COOH group. The aforementioned carboxyl group may be esterified. Specific examples of the optionally esterified carboxyl group include carboxyl group and C₁₋₆ alkoxycarbonyl group (preferably C₁₋₄ alkoxycarbonyl group). The C₁₋₆ alkoxy moiety of the C₁₋₆ alkoxycarbonyl group means the same as the C₁₋₆ alkoxy group of the optionally substituted alkoxy group.

The "halogen atom" used here is preferably selected from a fluorine atom, a chlorine atom, a bromine atom, and an iodine atom.

The term "alkyl group" used here (when used as a group or a part of a group) is a straight chain or branched chain alkyl group having carbon atoms in the designated number. Examples of the alkyl group include a C₁₋₆ alkyl group, preferably a C₁₋₄ alkyl group. The C₁₋₆ alkyl group means a straight chain or branched chain alkyl group having 1 to 6 carbon atoms. Examples of the C₁₋₆ alkyl group include, but are not limited to, methyl group, ethyl group, propyl group, isopropyl group, butyl group, 1-methylpropyl group, 2-methylpropyl group, tert-butyl group, pentyl group, 1-methylbutyl group, 2-methylbutyl group, 3-methylbutyl group, 1,1-dimethylpropyl group, 2,2-dimethylpropyl group, 1,2-dimethylpropyl group, 1-ethylpropyl group, hexyl group, 1-methylpentyl group, 2-methylpentyl group, 3-methylpentyl group, 4-methylpentyl group, 1,1-dimethylbutyl group, 2,2-dimethylbutyl group, 3,3-dimethylbutyl group, 1,2-dimethylbutyl group, 1,3-dimethylbutyl group, 2,3-dimethylbutyl group, 1-ethylbutyl group, 2-ethylbutyl group, and 1-ethyl-2-methylpropyl group. Preferable examples of the alkyl group include straight chain or branched chain alkyl group having a carbon number of 1 to 4. Methyl group, ethyl group, propyl group, isopropyl group, butyl group, and isobutyl group are more preferred, and methyl group, ethyl group, and propyl group are particularly preferred.

The aforementioned alkyl group may be substituted, and examples of the substituent include hydroxy group, amino group, halogeno group, thiol group, and the like. As the halogeno group, fluoro group, chloro group, bromo group, and the like can be mentioned. The C₁₋₆ haloalkyl group means a C₁₋₆ alkyl group substituted by 1 to 5 halogeno groups. When two or more halogeno groups are present, the kind of the respective halogeno groups may be the same or different. Examples of the C₁₋₆ haloalkyl group include fluoromethyl group, difluoromethyl group, trifluoromethyl group, chlorodifluoromethyl group, 1-fluoroethyl group, 2-fluoroethyl group, 2-chloroethyl group, 2-bromoethyl group, 1,1-difluoroethyl group, 1,2-difluoroethyl group, 2,2,2-trifluoroethyl group, 1,1,2,2-tetrafluoroethyl group, 1,1,2,2,2-pentafluoroethyl group, 1-fluoropropyl group, 1,1-difluoropropyl group, 2,2-difluoropropyl group, 3-fluoropropyl group, 3,3,3-trifluoropropyl group, 4-fluorobutyl group, 4,4,4-trifluorobutyl group, 5-fluoropentyl group, 5,5,5-trifluoropentyl group, 6-fluorohexyl group, 6,6,6-trifluorohexyl group, and the like.

Examples of the "optionally substituted alkyl group" include "C₁₋₆ alkyl group optionally substituted by a hydroxy group, an amino group, or a thiol group", "C₁₋₆ alkyl group optionally substituted by a hydroxy group or an amino group", preferably "C₁₋₄ alkyl group optionally substituted by a hydroxy group, an amino group, or a thiol group" and "C₁₋₄ alkyl group optionally substituted by a hydroxy group or an amino group". For example, methyl group, ethyl group, propyl group, pentyl group, hydroxymethyl group, 2-hydroxyethyl group, aminomethyl group, 2-aminoethyl group, sulfanylmethyl group, and the like can be mentioned.

The term "alkoxy group" used here (when used as a group or a part of a group) shows an -O(alkyl) group having carbon atoms in the designated number. Examples of the alkoxy group include C₁₋₆ alkoxy group, preferably C₁₋₄ alkoxy group. Examples of the C₁₋₆ alkoxy group include, but are not limited to, methoxy group, ethoxy group, propoxy group, isopropoxy group, butoxy group, 1-methylpropoxy group, 2-methylpropoxy group, tert-butoxy group, pentyloxy group, 1-methylbutoxy group, 2-methylbutoxy group, 3-methylbutoxy group, 1,1-dimethylpropoxy group, 2,2-dimethylpropoxy group, 1,2-dimethylpropoxy group, 1-ethylpropoxy group, hexyloxy group, 1-methylpentyloxy group, 2-methylpentyloxy group, 3-methylpentyloxy group, 4-methylpentyloxy group, 1,1-dimethylbutoxy group, 2,2-dimethylbutoxy group, 3,3-dimethylbutoxy group, 1,2-dimethylbutoxy group, 1,3-dimethylbutoxy group, 2,3-dimethylbutoxy group, 1-ethylbutoxy group, 2-ethylbutoxy group, 1-ethyl-2-methylpropoxy group, and the like.

The aforementioned alkoxy group may be substituted, and examples of the substituent include hydroxy group, amino group, halogeno group, thiol group, and the like. As the halogeno group, the same substituents as those for the above-mentioned alkyl group can be mentioned. The C₁₋₆ haloalkoxy group means a C₁₋₆ alkoxy group substituted by 1 to 5 halogeno groups. When the number of the halogeno group is two or more, the kinds of the halogeno groups may be the same or different. Examples of the C₁₋₆ haloalkoxy group include fluoromethoxy group, difluoromethoxy group, trifluoromethoxy group, 1-fluoroethoxy group, 2-fluoroethoxy group, 2-chloroethoxy group, 2-bromoethoxy group, 1,1-difluoroethoxy group, 1,2-difluoroethoxy group, 2,2,2-trifluoroethoxy group, 1,1,2,2-tetrafluoroethoxy group, 1,1,2,2,2-pentafluoroethoxy group, 1-fluoropropoxy group, 1,1-difluoropropoxy group, 2,2-difluoropropoxy group, 3-fluoropropoxy group, 3,3,3-trifluoropropoxy group, 2,2,3,3,3-pentafluoropropoxy group, 4-fluorobutoxy group, 4,4,4-trifluorobutoxy group, 5-fluoropentyloxy group, 5,5,5-trifluoropentyloxy group, 6-fluorohexyloxy group, 6,6,6-trifluorohexyloxy group, and the like.

The term "thiol group" used here (when used as a group or a part of a group) shows -SH group and means the same as the "sulfanyl group". The aforementioned thiol group may be substituted, and examples of the substituent include a C₁₋₆ alkyl group and the like. The C₁₋₆ alkyl group means the same as the C₁₋₆ alkyl group of the optionally substituted alkyl group. Specific examples of the optionally substituted thiol group include thiol group and C₁₋₆ alkylthio group. Examples of the C₁₋₆ alkylthio group include, but are not limited to, methylthio group, ethylthio group, propylthio group, butylthio group, and the like.

The term "amino group" used here (when used as a group or a part of a group) shows -NH₂ group. The aforementioned amino group may be substituted by 1 or 2 substituents, and examples of the substituent include C₁₋₆ alkyl group, -COR⁸ (wherein R⁸ is a hydrogen atom or a C₁₋₆ alkyl group) and the like. The C₁₋₆ alkyl group means the same as the C₁₋₆ alkyl group of the optionally substituted alkyl group. Specific examples of the optionally substituted amino group include amino group, C₁₋₆ alkylamino group, di(C₁₋₆ alkyl)amino group, and -NR⁷COR⁸ wherein R⁷ and R⁸ are each independently hydrogen atom or C₁₋₆ alkyl group. Examples of the C₁₋₆ alkylamino group include, but are not limited to, methylamino group, ethylamino group, 1-methylethylamino group, and the like, and examples of the di(C₁₋₆ alkyl)amino group include, but are not limited to, dimethylamino group, N-ethyl-N-methylamino group, bis(1-methylethyl)amino group, and the like.

Examples of the preferable compound used as the active ingredient of the repellent of the present invention include 2-thiophenecarboxaldehyde, 3-thiophenemethanol, 2,5-dimethylthiophene, 2-thiopheneethanol, 3-methylthiophene, 2-chloro-3-methylthiophene, 2-ethylthiophene, 2-(2-aminoethyl) thiophene, 2-propylthiophene, 3-methylthiophen-2-carboxaldehyde, 3-chlorothiophene, methyl thiophene-3-carboxylate, 2-propionylthiophene, ethyl 2-thiophenecarboxylate, methyl 2-thiophenecarboxylate, 2-acetylthiophene, 3-acetyl-2,5-dimethylthiophene, 2-methoxythiophene, 2-bromothiophene, 2-thiophenemethanethiol, 2-pentylthiophene, 3-methylbenzo[b]thiophene, and the like.

Preferable examples of the compound represented by the formula (Ia) include a compound represented by the formula (Ib) or (Ic): 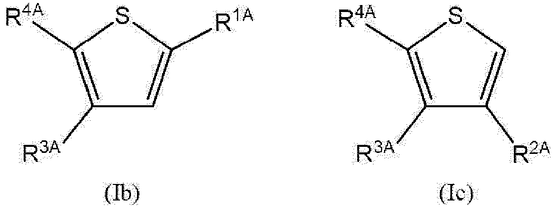 wherein each symbol is as defined for the formula (Ia), R^{1A}, R^{3A}, and R^{4A} in the formula (Ib) are not hydrogen atoms at the same time, and R^{2A}, R^{3A}, and R^{4A} in the formula (Ic) are not hydrogen atoms at the same time.

In a preferred embodiment of the present invention, in the formulas (Ia), (Ib) and (Ic), R^{1A}, R^{2A}, R^{3A}, and R^{4A} are each independently a hydrogen atom; a formyl group; a C₁₋₆ alkyl-carbonyl group (e.g., acetyl group, propionyl group); a C₁₋₆ alkoxycarbonyl group (e.g., methoxycarbonyl group, ethoxycarbonyl group); a halogen atom (e.g., chlorine atom, bromine atom); a C₁₋₆ alkyl group optionally substituted by a hydroxy group, an amino group, or a thiol group (e.g., methyl group, ethyl group, propyl group, pentyl group, hydroxymethyl group, 2-hydroxyethyl group, 2-aminoethyl group, sulfanylmethyl group); or a C₁₋₆ alkoxy group (e.g., methoxy group);
R^{3A} and R^{4A} are optionally bonded to each other to form a benzene ring together with carbon atoms bonded thereto;
provided that R^{1A}, R^{2A}, R^{3A}, and R^{4A} in the formula (Ia) are not hydrogen atoms at the same time, R^{1A}, R^{3A}, and R^{4A} in the formula (Ib) are not hydrogen atoms at the same time, and R^{2A}, R^{3A}, and R^{4A} in the formula (Ic) are not hydrogen atoms at the same time.

In another preferred embodiment of the present invention, in the formula (Ia), 1, 2 or 3 selected from R^{1A}, R^{2A}, R^{3A}, and R^{4A} is/are hydrogen atom(s), and the rest is a group other than hydrogen atom.

In the formula (1), preferably, R¹ and R² are each independently a hydrogen atom; a formyl group; a C₁₋₆ alkyl-carbonyl group (e.g., acetyl group, propionyl group); a C₁₋₆ alkoxycarbonyl group (e.g., methoxycarbonyl group, ethoxycarbonyl group); a halogen atom (e.g., chlorine atom, bromine atom); a C₁₋₆ alkyl group optionally substituted by a hydroxy group, an amino group, or a thiol group (e.g., methyl group, ethyl group, propyl group, pentyl group, hydroxymethyl group, 2-hydroxyethyl group, 2-aminoethyl group, sulfanylmethyl group); or a C₁₋₆ alkoxy group (e.g., methoxy group); provided that R¹ and R² are not hydrogen atoms at the same time.

In the formula (1), more preferably, one of R¹ and R² is a hydrogen atom, and the other is a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group.

In the formula (1), further preferably, one of R¹ and R² is a hydrogen atom, and the other is a C₁₋₆ alkyl-carbonyl group or a C₁₋₆ alkoxycarbonyl group.

In another preferred embodiment of the present invention, in the formula (1), R¹ and R² are each independently a hydrogen atom; a formyl group; a C₁₋₆ alkyl-carbonyl group; a C₁₋₆ alkoxycarbonyl group; a C₁₋₆ alkyl group optionally substituted by a hydroxy group, an amino group, or a thiol group; provided that R¹ and R² are not hydrogen atoms at the same time.

Preferable examples of the compound represented by the formula (1) include a compound represented by the formula (2) or (3): 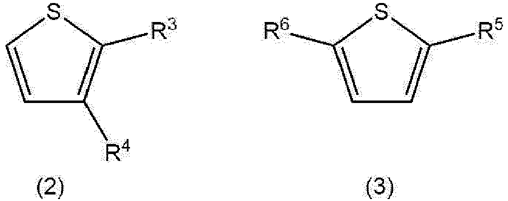 wherein R³, R⁴, R⁵, and R⁶ are each independently a hydrogen atom; a formyl group; a C₁₋₆ alkyl-carbonyl group (e.g., acetyl group, propionyl group); a C₁₋₆ alkoxycarbonyl group (e.g., methoxycarbonyl group, ethoxycarbonyl group); a halogen atom (e.g., chlorine atom, bromine atom); a C₁₋₆ alkyl group optionally substituted by a hydroxy group, an amino group, or a thiol group (e.g., methyl group, ethyl group, propyl group, pentyl group, hydroxymethyl group, 2-hydroxyethyl group, 2-aminoethyl group, sulfanylmethyl group); or a C₁₋₆ alkoxy group (e.g., methoxy group); provided that R³ and R⁴ are not hydrogen atoms at the same time, and R⁵ and R⁶ are not hydrogen atoms at the same time.

In the formula (2), preferably, one of R³ and R⁴ is a hydrogen atom, and the other is a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group.

In the formula (2), more preferably, one of R³ and R⁴ is a hydrogen atom, and the other is a C₁₋₆ alkyl-carbonyl group or a C₁₋₆ alkoxycarbonyl group.

In a preferred embodiment of the present invention, in the formula (2), R³ is a C₁₋₆ alkyl-carbonyl group or a C₁₋₆ alkoxycarbonyl group, and R⁴ is a hydrogen atom.

In another preferred embodiment of the present invention, in the formula (2), R³ is a hydrogen atom, and R⁴ is a C₁₋₆ alkyl-carbonyl group or a C₁₋₆ alkoxycarbonyl group.

In another preferred embodiment of the present invention, in the formula (3), R⁵ and R⁶ are each independently a C₁₋₆ alkyl group (e.g., methyl).

In another preferred embodiment of the present invention, in the formula (2) and (3), R³, R⁴, R⁵, and R⁶ are each independently a hydrogen atom; a formyl group; a C₁₋₆ alkyl-carbonyl group; a C₁₋₆ alkoxycarbonyl group; a C₁₋₆ alkyl group optionally substituted by a hydroxy group, an amino group, or a thiol group; or a C₁₋₆ alkoxy group; provided that R³ and R⁴ are not hydrogen atoms at the same time, and R⁵ and R⁶ are not hydrogen atoms at the same time.

As the C₁₋₆ alkyl-carbonyl group for R^{1A}, R^{2A}, R^{3A}, R^{4A}, R¹, R², R³, R⁴, R⁵, or R⁶, a C₁₋₄ alkyl-carbonyl group is preferred and, for example, acetyl group, propionyl group, and the like can be mentioned.

As the C₁₋₆ alkoxycarbonyl group for R^{1A}, R^{2A}, R^{3A}, R^{4A}, R¹, R², R³, R⁴, R⁵, or R⁶, a C₁₋₄ alkoxy-carbonyl group is preferred and, for example, methoxycarbonyl group, ethoxycarbonyl group, and the like can be mentioned.

As the halogen atom for R^{1A}, R^{2A}, R^{3A}, R^{4A}, R¹, R², R³, R⁴, R⁵, or R⁶, for example, chlorine atom, bromine atom, or the like can be mentioned.

As the C₁₋₆ alkyl group optionally substituted by a hydroxy group, an amino group, or a thiol group for R^{1A}, R^{2A}, R^{3A}, R^{4A}, R¹, R², R³, R⁴, R⁵, or R⁶, a C₁₋₄ alkyl group optionally substituted by a hydroxy group, an amino group, or a thiol group is preferred and, for example, methyl group, ethyl group, propyl group, pentyl group, hydroxymethyl group, 2-hydroxyethyl group, 2-aminoethyl group, sulfanylmethyl group, and the like can be mentioned.

As the C₁₋₆ alkoxy group for R^{1A}, R^{2A}, R^{3A}, R^{4A}, R¹, R², R³, R⁴, R⁵, or R⁶, a C₁₋₄ alkoxy group is preferred and, for example, methoxy group, ethoxy group, and the like can be mentioned.

The salt of the compound of the present invention includes any salt as long as it is pharmaceutically or agriculturally, or industrially acceptable. For example, alkali metal salts such as sodium salt and potassium salt; alkaline earth metal salts such as magnesium salt and calcium salt; ammonium salts such as dimethylammonium salt and triethylammonium salt; inorganic acid salts such as hydrochloride, perchlorate, sulfate and nitrate; organic acid salts such as acetate and methanesulfonate; and the like can be mentioned.

The compound of the present invention can be preferably used as an active ingredient of a repellent for mammals. The aforementioned compound can be directly used as an active ingredient, or formulated into a liquid, a powder, a granule, a solid, a sheet, and the like, and used after processing into a known form of a repellent. These preparations can be prepared by using additives generally used for formulation and a method generally used in the fields of pharmaceutical, pesticide, food, and the like. Furthermore, these preparations are preferably formulated into a preparation with sustained odor. The preparation with sustained odor includes, for example, a sustained release preparation, a controlled release preparation, and the like. Examples of the aforementioned additive include, but are not limited to, a surfactant, an organic solvent, a polymer material, and the like.

As the aforementioned surfactant, anionic surfactant, nonionic surfactant, and amphoteric surfactant can be mentioned. Examples of the anionic surfactant include alkylbenzenesulfonate, alkanesulfonate, olefinsulfonate, monoalkyl sulfuric acid ester salt, polyoxyethylene alkyl ether sulfuric acid ester salt, polyoxyethylene alkylphenyl ether sulfuric acid ester salt, and the like. As these salts, alkali metal salts such as sodium salt, potassium salt, and the like, alkanolamine salts such as monoethanolamine, diethanolamine, triethanolamine, and the like, and the like can be mentioned. Examples of the nonionic surfactant include polyoxyethylene alkyl ether, polyoxyethylene alkylphenyl ether, polyoxyethylene-polyoxypropylene block copolymer, and the like, which are represented by ethylene oxide adducts of nonylphenyl ether and higher alcohol. As the amphoteric surfactant, betaine type amphoteric surfactants such as alkylbetaine, alkylamidobetaine, carbobetaine, hydroxysulfobetaine, and the like, imidazoline type amphoteric surfactants, and the like can be mentioned. It is possible to select and use one or more kinds of these surfactants.

Examples of the aforementioned organic solvent include solvents such as methanol, ethanol, propanol, isopropanol, ethylene glycol or propylene glycol, polymers thereof such as polyethylene glycol or polypropylene glycol, methylcellosolve, cellosolve, butylcellosolve, propylcellosolve, diethylene glycol, methylcarbitol, carbitol, butylcarbitol, propylcarbitol, propylene glycol monomethyl ether, propylene glycol monoethyl ether, propylene glycol monobutyl ether, propylene glycol monopropyl ether, dipropylene glycol, dipropylene glycol monomethyl ether, dipropylene glycol monoethyl ether, dipropylene glycol monobutyl ether, dipropylene glycol monopropyl ether, glycerol and derivatives thereof, and the like. It is possible to select and use one or more kinds of the organic solvents.

The polymer material is not particularly limited as long as the effect as the repellent of the present invention is not impaired. For example, rubber materials such as silicone rubber, acrylic rubber, guar gum, locust bean gum, natural rubber, urethane rubber, ethylene-propylene rubber (EPR), ethylene-propylene-diene rubber (EPDM), styrene-butadiene rubber (SBR, SEBR, and the like); synthetic polymers such as polyvinyl alkyl ether, polyvinyl alcohol, polyvinyl acetate, methyl vinyl ether/maleic anhydride copolymer, polyvinylpyrrolidone, carboxylvinyl polymer, vinylpyrrolidone/vinyl acetate alkylaminoacrylic acid copolymer, metacarboxybetaine/metacarboxy ester copolymer, styrene/maleic acid copolymer, ethylene/vinyl acetate copolymer, partially saponificated ethylene/vinyl acetate copolymer, partially saponificated polyvinyl acetate, polyethylene, polypropylene, polyethylene terephthalate, polybutylene terephthalate, polyamide, polyacetal, polyphenylene sulfide, polyimide, polyetherketone, polyetherimide, polyetheretherketone, polyacrylonitrile, poly(meth)acrylic acid alkyl ester, polyalkylene oxide, and the like; natural polymer materials such as chitin, chitosan, starch, collagen, pullulan, ethylcellulose, methylcellulose, cellulose acetate, hydroxyethylcellulose, hydroxypropylcellulose, methylcellulose phthalate, carboxymethylcellulose, and the like, and the like can be mentioned. It is possible to select and use one or more kinds of the polymer materials.

The repellent of the present invention can also be used, for example, as a solid agent obtained by adding the compound of the present invention to a gel substrate of the above-mentioned polymer materials, dispersing the compound well and molding same, or can also be used in the form of an aerosol.

Moreover, in the aforementioned repellent of the present invention, the compound of the present invention can also be impregnated in or carried on a porous substance. Examples of the porous substance include zeolite, porous silica, cellulose, heat-moisture treated starch, cyclodextrin, polyurethane foam, foamed polystyrene, and the like. In addition, the repellent of the present invention or the compound of the present invention can also be used by being impregnated in, coated on, or laminated on other substrates such as non-woven fabric, rock wool, foamed urethane, paper, cotton, felt, rope, net, and the like.

Where necessary, other repellent, and additives such as insect repellent, insecticide, antimicrobial agent, antifungal agent, flavor, colorant, and the like can also be added.

The repellent of the present invention is useful for harmful mammals in general that cause damage to farm products, forest, domestic animals or human habitation. Examples of the harmful mammals include, but are not limited to, mammals such as mouse, mole, rabbit, weasel, deer, wild boar, monkey, cat, bear, and the like, particularly the animals of Rodentia and Carnivora.

Rodentia animal is an animal also called rodent animal, and examples of the Rodentia animal include Myodonta animals such as jerboa, mole rat, rodent of Cricetidae, hamster, water vole, bank vole, black rat, brown rat, mouse, large Japanese field mouse, small Japanese field mouse, red-backed mouse, gerbil, sand rat, giant African pouched rat, and the like; Castoriomorpha animals such as beaver and the like; Glirimorpha animals such as dormouse and the like; Sciurida animals such as squirrel, chipmunk, and the like; and Hystricognathi animals such as spiny rat, abrocome, nutria, guinea pig, and the like.

Carnivora animal is an animal also called carnivorous animal, and examples of the Carnivora animal include Felidae animals such as cat and the like; Mustelidae animals such as weasel and the like; and Ursidae animals such as bear and the like.

The "space from which the mammal is to be repelled" means a habitation space of a mammal to be repelled or a space possibly invaded by the mammal; and examples include, but are not limited to, fields of rice and other crops, fruit farm, forest, breeding ground of domestic animals, road, expressway, railroad, airport, garbage collection point, park, garden, flower bed, parking place, building, house, kitchen, lavatory, veranda, storeroom, space under the floor, telephone pole, electric cable, communication cable, wire netting, fence, and the like.

Examples of the method of placing a compound to be the active ingredient in a space from which a mammal is to be repelled include, but are not limited to, a method of placing a composition containing a compound to be the active ingredient, a method of sprinkling, spraying, coating, or volatilizing a compound to be the active ingredient, and the like.

The concentration of the compound of the present invention in the repellent of the present invention can be appropriately determined according to the kind of the object mammals, use place, formulation, and the like, based on experiments and the like. The ratio of the compound of the present invention and an additive is within the range of 0.0001:100 (W/W) to 100:0.0001 (W/W). When the ratio of the compound of the present invention is within the aforementioned range, the repellent effect on harmful mammals can be sufficiently exhibited and maintained.

### [Example]

The present invention is explained in more detail in the following by referring to Examples

### Example 1: Innate fear behavior-inducing activity in mouse of odor molecules reported to have a repellent effect on birds

A 10 ppm gas was generated for 9 kinds of available odor molecules from those reported to have a repellent effect on birds by using a gas permeator (manufactured by GASTEC, PD-1B-2). Holes (4.5 cm and 12 cm high) were respectively drilled on opposite sides of a sealed test cage (17×17×18.5 cm), a tube for discharging the gas generated by the permeator was connected to the lower hole, the gas was introduced, and the higher hole allowed the air in the test cage to be released. After the air in the test cage was completely replaced by the odor gas, C57/BL6 male mice aged about 2 months to 6 months were put into the test cage (one mouse per cage), and the freezing behavior was analyzed by a freezing behavior automatic analyzer (manufactured by Actimetrics, Freeze Frame2) for 20 min. The time during which the mouse was motionless for 2 seconds or longer was measured as a freezing behavior, and the duration of freezing behavior within 20 minutes of observation time (Freezing time) was shown in %. Each experiment was performed with n = 6. The student's t-test was performed using the data of 2-acetylthiophene and the data of other 8 kinds of compounds. *** shows a significant difference at p<0.001.

### test compounds

2-Acetylthiophene
Salicylaldehyde
o-Tolualdehyde
Thiazole
Pyridine
5,6,7,8-Tetrahydroisoquinoline
Pyrrole
2-Acetylthiazole
1,2,3,4-Tetrahydroquinoline

The results are shown in Fig. 1. Among the analyzed 9 kinds of compounds, only 2-acetylthiophene induced a freezing behavior, which is an index of an innate fear behavior, in the mouse. It was shown that the remaining 8 kinds of compounds had almost no or very weak freezing behavior-inducing activity in the mouse. Therefore, it was suggested that birds and mammals are greatly different in their reactivity to odor molecules.

### Example 2: Quantification of innate fear behavior of mouse to thiophenes by using a freezing test

A constant concentration of the gas of the following various compounds was generated by a gas permeator (manufactured by GASTEC, PD-1B-2). The concentration of the generated gas is shown in Fig. 2. When the concentration is not particularly indicated, an odor gas was generated at a concentration of 10 ppm. Holes (4.5 cm and 12 cm high) were respectively drilled on opposite sides of a sealed test cage (17×17×18.5 cm), a tube for discharging the gas generated by the permeator was connected to the lower hole, the gas was introduced, and the higher hole allowed the air in the test cage to be released. After the air in the test cage was completely replaced by the odor gas, C57/BL6 male mice aged about 2 months to 6 months were put into the test cage (one mouse per cage), and the freezing behavior was analyzed by a freezing behavior automatic analyzer (manufactured by Actimetrics, Freeze Frame2) for 20 min. The time during which the mouse was motionless for 2 seconds or longer was measured as a freezing behavior, and the duration of freezing behavior within 20 minutes of observation time (Freezing time) was shown in %. Each experiment was performed with n = 6. The student's t-test was performed using the data of no odor (no odor) and the data of various thiophene compounds. The data for all test compounds showed a significant difference from the data of no odor at p<0.05.

### test compounds

2-thiophenecarboxaldehyde
3-thiophenemethanol
2,5-dimethylthiophene
2-thiopheneethanol
3-methylthiophene
2-chloro-3-methylthiophene
2-ethylthiophene
2-(2-aminoethyl)thiophene
2-propylthiophene
3-methylthiophen-2-carboxaldehyde
3-chlorothiophene
methyl thiophene-3-carboxylate
2-propionylthiophene
ethyl 2-thiophenecarboxylate
methyl 2-thiophenecarboxylate
2-acetylthiophene

The results are shown in Fig. 2. The thiophene compounds having various substituents induced a freezing behavior in the mice, which is an index of an innate fear behavior. Particularly, it was clarified that the thiophene compounds having an alkylcarbonyl group or an alkoxycarbonyl group have very strong activity for inducing freezing behavior.

### Example 3: Quantification of innate fear behavior of mouse to thiophene and 2-acetylthiophene

A 10 ppm gas of thiophene and 2-acetylthiophene was generated using a gas permeator (manufactured by GASTEC, PD-1B-2). Holes (4.5 cm and 12 cm high) were respectively drilled on opposite sides of a sealed test cage (17×17×18.5 cm), a tube for discharging the gas generated by the permeator was connected to the lower hole, the gas was introduced, and the higher hole allowed the air in the test cage to be released. After the air in the test cage was completely replaced by the odor gas, C57/BL6 male mice aged about 2 months to 6 months were put into the test cage (one mouse per cage), and the freezing behavior was analyzed by a freezing behavior automatic analyzer (manufactured by Actimetrics, Freeze Frame2) for 20 min. The time during which the mouse was motionless for 2 seconds or longer was measured as a freezing behavior, and the duration of freezing behavior within 20 minutes of observation time (Freezing time) was shown in %. Each experiment was performed with n = 6. The student's t-test was performed using the data of no odor (No odor) and the data of thiophene or 2-acetylthiophene. *** shows a significant difference at p<0.001.

The results are shown in Fig. 3. The freezing behavior-inducing activity of thiophene having no functional group was very low and showed no significant difference even when compared with the case of no odor. In contrast, it was clarified that 2-acetylthiophene induces a very strong freezing behavior.

### Example 4: Quantification of innate fear behavior of mouse to thiophenes by using a freezing test

A 10 ppm (4.9 ppm only for 3-acetyl-2,5-dimethylthiophene) odor gas of the following various compounds was generated by a gas permeator (manufactured by GASTEC, PD-1B-2). Holes (4.5 cm and 12 cm high) were respectively drilled on opposite sides of a sealed test cage (17×17×18.5 cm), a tube for discharging the gas generated by the gas permeator was connected to the lower hole, the gas was introduced, and the higher hole allowed the air in the test cage to be released. After the air in the test cage was completely replaced by the odor gas, C57/BL6 male mice aged about 2 months were put into the test cage (one mouse per cage), and the freezing behavior was analyzed by a freezing behavior automatic analyzer (manufactured by Actimetrics, Freeze Frame2) for 20 min. The time during which the mouse was motionless for 2 seconds or longer was measured as a freezing behavior, and the duration of freezing behavior within 20 minutes of observation time (Freezing time) was shown in %. Each experiment was performed with n = 6. The student's t-test was performed using the data of no odor (no odor) and the data of various thiophene compounds. The data for all test compounds showed a significant difference from the data of no odor at p<0.001.

### test compounds

3-methylbenzo[b]thiophene
2-Pentylthiophene
2-thiophenemethanethiol
2-Bromothiophene
2-methoxythiophene
3-Acetyl-2,5-dimethylthiophene

The results are shown in Fig. 4. Thiophene compounds having various substituents induced a freezing behavior in the mice.

### Example 5

A deer is lured with feed to confirm that it is attracted to feed, and the response of the deer to a food containing the repellent of the present invention is confirmed. In a place where feeding damage by deer has actually occurred, a wire netting with 3 holes A, B, and C is set in the route where deer appear frequently, and the repellent effect is confirmed based on the changes in the number of deer that pass through the hole when the repellent is set in any of the holes A, B, and C.

### Example 6

A wild boar or a pig domesticated from wild boar is lured with feed to confirm that it is attracted to feed, and the response of the wild boar or pig to a food containing the repellent of the present invention is confirmed.

### Example 7

A commercially available cat food (boiled tuna flakes, about 95 g) is placed in a circular plastic container (diameter 25 cm, height 7 cm), and the repellent of the present invention is set. The residual ratio of the cat food in each container is measured at given time intervals.

### [Industrial Applicability]

The present invention is directed to a repellent for mammals containing, as an active ingredient, a compound having an odor that innately induces fear in mammals. Since it can prevent damage by harmful small mammals, it can be utilized in the fields of, for example, agriculture, forestry, transportation (expressway, railroad, airplane), communication industry, and the like.

## Claims

1. A method for repelling a mammal, comprising placing at least one selected from a thiophene compound represented by the formula (Ia): 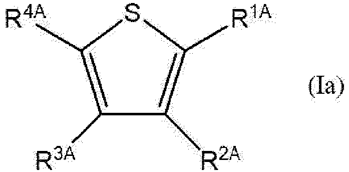
wherein R^{1A}, R^{2A}, R^{3A}, and R^{4A} are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group;
R^{3A} and R^{4A} are optionally bonded to each other to form a benzene ring together with carbon atoms bonded thereto;
provided that R^{1A}, R^{2A}, R^{3A}, and R^{4A} are not hydrogen atoms at the same time,
and a salt thereof in a space from which the mammal is to be repelled.

2. The method according to claim 1, wherein R^{1A}, R^{2A}, R^{3A}, and R^{4A} are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group;
R^{3A} and R^{4A} are optionally bonded to each other to form a benzene ring together with carbon atoms bonded thereto;
provided that R^{1A}, R^{2A}, R^{3A}, and R^{4A} are not hydrogen atoms at the same time.

3. The method according to claim 1, wherein the compound represented by the formula (Ia) is a compound represented by the formula (Ib) or (Ic): 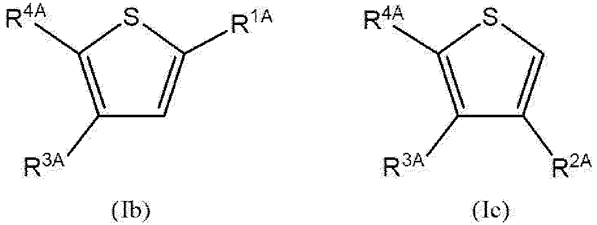 wherein each symbol is as defined in claim 1, R^{1A}, R^{3A}, and R^{4A} in the formula (Ib) are not hydrogen atoms at the same time, and R^{2A}, R^{3A}, and R^{4A} in the formula (Ic) are not hydrogen atoms at the same time.

4. The method according to claim 1, wherein the thiophene compound represented by the formula (Ia) is a compound represented by the formula (1): 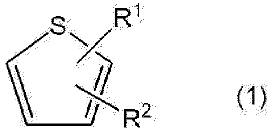 wherein R¹ and R² are each independently a hydrogen atom, an acyl group, an optionally esterified carboxyl group, a halogen atom, an optionally substituted alkyl group, an optionally substituted alkoxy group, an optionally substituted thiol group, or an optionally substituted amino group; provided that R¹ and R² are not hydrogen atoms at the same time.

5. The method according to claim 4, wherein R¹ and R² are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group; provided that R¹ and R² are not hydrogen atoms at the same time.

6. The method according to claim 4, wherein the compound represented by the formula (1) is a compound represented by the formula (2) or (3): 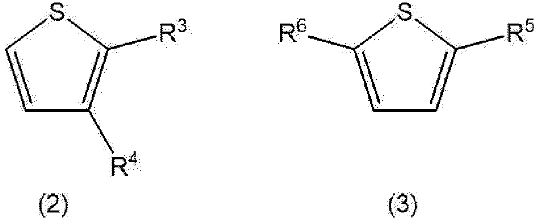 wherein R³, R⁴, R⁵, and R⁶ are each independently a hydrogen atom; a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group; provided that R³ and R⁴ are not hydrogen atoms at the same time, and R⁵ and R⁶ are not hydrogen atoms at the same time.

7. The method according to claim 6, wherein the compound represented by the formula (1) is a compound represented by the formula (2).

8. The method according to claim 7, wherein one of R³ and R⁴ is a hydrogen atom, and the other is a formyl group; a C₁₋₆ alkyl-carbonyl group; a C₁₋₆ alkoxycarbonyl group; a halogen atom; a C₁₋₆ alkyl group optionally substituted by a hydroxy group, an amino group, or a thiol group; or a C₁₋₆ alkoxy group.

9. The method according to claim 7, wherein one of R³ and R⁴ is a hydrogen atom, and the other is a C₁₋₆ alkyl-carbonyl group or a C₁₋₆ alkoxycarbonyl group.

10. The method according to claim 6, wherein the compound represented by the formula (1) is a compound represented by the formula (3).

11. The method according to claim 10, wherein R⁵ and R⁶ are each independently a C₁₋₆ alkyl group.

12. The method according to claim 1, wherein the compound represented by the formula (Ia) is selected from
2-acetylthiophene,
methyl 2-thiophenecarboxylate,
ethyl 2-thiophenecarboxylate,
2-propionylthiophene,
methyl thiophene-3-carboxylate,
3-chlorothiophene,
3-methylthiophene-2-carboxaldehyde,
2-propylthiophene,
2-(2-aminoethyl)thiophene,
2-ethylthiophene,
2-chloro-3-methylthiophene,
3-methylthiophene,
2-thiopheneethanol,
2,5-dimethylthiophene,
3-thiophenemethanol,
2-thiophenecarboxaldehyde,
3-acetyl-2,5-dimethylthiophene,
2-methoxythiophene,
2-bromothiophene,
2-thiophenemethanethiol,
2-pentylthiophene, and
3-methylbenzo[b]thiophene.

13. The method according to claim 1, wherein the compound represented by the formula (Ia) is selected from
2-acetylthiophene,
methyl 2-thiophenecarboxylate,
ethyl 2-thiophenecarboxylate,
2-propionylthiophene,
methyl thiophene-3-carboxylate, and
3-acetyl-2,5-dimethylthiophene.

## Patentansprüche

1. Verfahren zur Abwehr eines Säugetiers, welches umfasst, mindestens eine aus einer Thiophenverbindung der Formel (Ia) 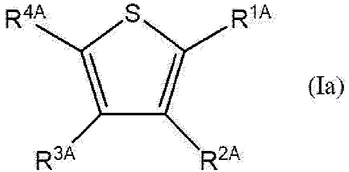
worin R^{1A}, R^{2A}, R^{3A} und R^{4A} jeweils unabhängig ein Wasserstoffatom, eine Acylgruppe, eine gegebenenfalls veresterte Carboxylgruppe, ein Halogenatom, eine gegebenenfalls substituierte Alkylgruppe, eine gegebenenfalls substituierte Alkoxygruppe, eine gegebenenfalls substituierte Thiolgruppe oder eine gegebenenfalls substituierte Aminogruppe sind;
R^{3A} und R^{4A} gegebenenfalls aneinander gebunden sind, um einen Benzolring zusammen mit daran gebundenen Kohlenstoffatomen zu bilden;
mit der Maßgabe, dass R^{1A}, R^{2A}, R^{3A} und R^{4A} nicht gleichzeitig Wasserstoffatome sind,
und einem Salz davon ausgewählte Verbindung
in einem Raum einzusetzen, aus dem das Säugetier abgehalten werden soll.

2. Verfahren nach Anspruch 1, wobei R^{1A}, R^{2A}, R^{3A} und R^{4A} jeweils unabhängig voneinander ein Wasserstoffatom, eine Formylgruppe, eine C₁₋₆-Alkylcarbonylgruppe; eine C₁₋₆-Alkoxycarbonylgruppe; ein Halogenatom, eine gegebenenfalls durch eine Hydroxygruppe, eine Aminogruppe oder eine Thiolgruppe substituierte C₁₋₆-Alkylgruppe; oder eine C₁₋₆-Alkoxygruppe sind;
R^{3A} und R^{4A} gegebenenfalls aneinander gebunden sind, um einen Benzolring zusammen mit daran gebundenen Kohlenstoffatomen zu bilden;
mit der Maßgabe, dass R^{1A}, R^{2A}, R^{3A} und R^{4A} nicht gleichzeitig Wasserstoffatome sind.

3. Verfahren nach Anspruch 1, wobei die durch die Formel (Ia) dargestellte Verbindung eine durch die Formel (Ib) oder (Ic) dargestellte Verbindung ist: 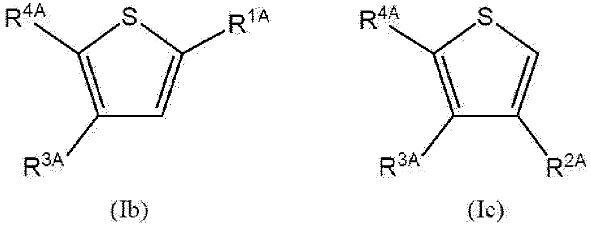 worin jedes Symbol wie in Anspruch 1 definiert ist, R^{1A}, R^{3A} und R^{4A} in der Formel (Ib) nicht gleichzeitig Wasserstoffatome sind, und R^{2A}, R^{3A} und R^{4A} in der Formel (Ic) nicht gleichzeitig Wasserstoffatome sind.

4. Verfahren nach Anspruch 1, wobei die durch die Formel (Ia) dargestellte Thiophenverbindung eine durch die Formel (1) dargestellte Verbindung ist: 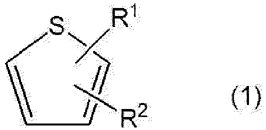 worin R¹ and R² jeweils unabhängig voneinander ein Wasserstoffatom, eine Acylgruppe, eine gegebenenfalls veresterte Carboxylgruppe, ein Halogenatom, eine gegebenenfalls substituierte Alkylgruppe, eine gegebenenfalls substituierte Alkoxygruppe, eine gegebenenfalls substituierte Thiolgruppe oder eine gegebenenfalls substituierte Aminogruppe sind; mit der Maßgabe, dass R¹ and R² nicht gleichzeitig Wasserstoffatome sind

5. Verfahren nach Anspruch 4, wobei R¹ und R² jeweils unabhängig voneinander ein Wasserstoffatom, eine Formylgruppe, eine C₁₋₆-Alkylcarbonylgruppe, eine C₁₋₆-Alkoxycarbonylgruppe, ein Halogenatom, eine C₁₋₆-Alkylgruppe, die gegebenenfalls durch eine Hydroxygruppe, eine Aminogruppe oder eine Thiolgruppe substituiert ist, oder eine C₁₋₆-Alkoxygruppe sind, mit der Maßgabe, dass R¹ und R² nicht gleichzeitig Wasserstoffatome sind.

6. Verfahren nach Anspruch 4, wobei die durch die Formel (1) dargestellte Verbindung eine durch die Formel (2) oder (3) dargestellte Verbindung ist: 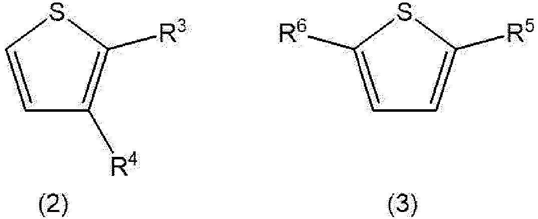
worin R³, R⁴, R⁵ und R⁶ jeweils unabhängig voneinander ein Wasserstoffatom, eine Formylgruppe, eine C₁₋₆-Alkylcarbonylgruppe, eine C₁₋₆-Alkoxycarbonylgruppe, ein Halogenatom, eine C₁₋₆-Alkylgruppe, die gegebenenfalls durch eine Hydroxygruppe, eine Aminogruppe oder eine Thiolgruppe substituiert ist, oder eine C₁₋₆-Alkoxygruppe sind;
mit der Maßgabe, dass R³ und R⁴ nicht gleichzeitig Wasserstoffatome sind, und R⁵ und R⁶ nicht gleichzeitig Wasserstoffatome sind.

7. Verfahren nach Anspruch 6, wobei die durch die Formel (1) dargestellte Verbindung eine durch die Formel (2) dargestellte Verbindung ist.

8. erfahren nach Anspruch 7, wobei einer von R³ und R⁴ ein Wasserstoffatom ist und der andere eine Formylgruppe, eine C₁₋₆-Alkylcarbonylgruppe, eine C₁₋₆-Alkoxycarbonylgruppe, ein Halogenatom, eine C₁₋₆-Alkylgruppe, die gegebenenfalls durch eine Hydroxygruppe, eine Aminogruppe oder eine Thiolgruppe substituiert ist, oder eine C₁₋₆-Alkoxygruppe ist.

9. Verfahren nach Anspruch 7, wobei einer von R³ und R⁴ ein Wasserstoffatom ist und der andere eine C₁₋₆-Alkylcarbonylgruppe oder eine C₁₋₆-Alkoxycarbonylgruppe ist.

10. Verfahren nach Anspruch 6, wobei die durch die Formel (1) dargestellte Verbindung eine durch die Formel (3) dargestellte Verbindung ist.

11. Verfahren nach Anspruch 10, wobei R⁵ und R⁶ jeweils unabhängig voneinander eine C₁₋₆-Alkylgruppe sind.

12. Verfahren nach Anspruch 1, wobei die durch die Formel (Ia) dargestellte Verbindung ausgewählt ist aus:
2-Acetylthiophen,
Methyl-2-thiophencarboxylat,
Ethyl-2-thiophencarboxylat,
2-Propionylthiophen,
Methylthiophen-3-carboxylat,
3-Chlorthiophen,
3-Methylthiophen-2-carboxaldehyd,
2-Propylthiophen,
2-(2-Aminoethyl)thiophen,
2-Ethylthiophen,
2-Chlor-3-methylthiophen,
3-Methylthiophen,
2-Thiophenethanol,
2,5-Dimethylthiophen,
3-Thiophenmethanol,
2-Thiophencarboxaldehyd,
3-Acetyl-2,5-dimethylthiophen,
2-Methoxythiophen,
2-Bromthiophen,
2-Thiophenmethanthiol,
2-Pentylthiophen und
3-Methylbenzo[b]thiophen.

13. Verfahren nach Anspruch 1, wobei die durch die Formel (Ia) dargestellte Verbindung ausgewählt ist aus:
2-Acetylthiophen,
Methyl-2-thiophencarboxylat,
Ethyl-2-thiophencarboxylat,
2-Propionylthiophen,
Methyl-thiophen-3-carboxylat und
3-Acetyl-2,5-dimethylthiophen.

## Revendications

1. Procédé pour repousser un mammifère, comprenant le placement d'au moins l'un choisi parmi un composé thiophène représenté par la formule (Ia) : 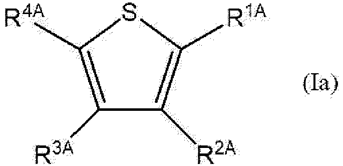
dans laquelle chacun de R^{1A}, R^{2A}, R^{3A} et R^{4A} est indépendamment un atome d'hydrogène, un groupe acyle, un groupe carboxyle éventuellement estérifié, un atome d'halogène, un groupe alkyle éventuellement substitué, un groupe alcoxy éventuellement substitué, un groupe thiol éventuellement substitué, ou un groupe amino éventuellement substitué ;
R^{3A} et R^{4A} sont éventuellement liés l'un à l'autre pour former un cycle benzène conjointement avec les atomes de carbone liés à ceux-ci ;
sous réserve que R^{1A}, R^{2A}, R^{3A} et R^{4A} ne soient pas des atomes d'hydrogène en même temps,
et un sel de celui-ci, dans un espace hors duquel le mammifère doit être repoussé.

2. Procédé selon la revendication 1, dans lequel chacun de R^{1A}, R^{2A}, R^{3A} et R^{4A} est indépendamment un atome d'hydrogène ; un groupe formyle ; un groupe (alkyle en C₁ à C₆)carbonyle ; un groupe (alcoxy en C₁ à C₆)carbonyle ; un atome d'halogène ; un groupe alkyle en C₁ à C₆ éventuellement substitué par un groupe hydroxy, un groupe amino, ou un groupe thiol ; ou un groupe alcoxy en C₁ à C₆ ;
R^{3A} et R^{4A} sont éventuellement liés l'un à l'autre pour former un cycle benzène conjointement avec les atomes de carbone liés à ceux-ci ;
sous réserve que R^{1A}, R^{2A}, R^{3A} et R^{4A} ne soient pas des atomes d'hydrogène en même temps.

3. Procédé selon la revendication 1, dans lequel le composé représenté par la formule (Ia) est un composé représenté par l'une des formules (Ib) et (Ic) : 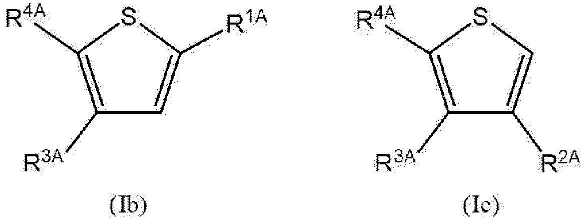 dans lesquelles chaque symbole est tel que défini dans la revendication 1, R^{1A}, R^{3A} et R^{4A} dans la formule (Ib) ne sont pas des atomes d'hydrogène en même temps, et R^{2A}, R^{3A} et R^{4A} dans la formule (Ic) ne sont pas des atomes d'hydrogène en même temps.

4. Procédé selon la revendication 1, dans lequel le composé thiophène représenté par la formule (Ia) est un composé représenté par la formule (1) : 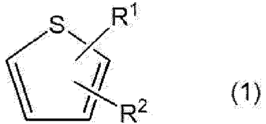 dans laquelle chacun de R¹ et R² est indépendamment un atome d'hydrogène, un groupe acyle, un groupe carboxyle éventuellement estérifié, un atome d'halogène, un groupe alkyle éventuellement substitué, un groupe alcoxy éventuellement substitué, un groupe thiol éventuellement substitué, ou un groupe amino éventuellement substitué ; sous réserve que R¹ et R² ne soient pas des atomes d'hydrogène en même temps.

5. Procédé selon la revendication 4, dans lequel chacun de R¹ et R² est indépendamment un atome d'hydrogène ; un groupe formyle ; un groupe (alkyle en C₁ à C₆)carbonyle ; un groupe (alcoxy en C₁ à C₆)carbonyle ; un atome d'halogène ; un groupe alkyle en C₁ à C₆ éventuellement substitué par un groupe hydroxy, un groupe amino, ou un groupe thiol ; un groupe alcoxy en C₁ à C₆ ; sous réserve que R¹ et R² ne soient pas des atomes d'hydrogène en même temps.

6. Procédé selon la revendication 4, dans lequel le composé représenté par la formule (1) est un composé représenté par l'une des formules (2) et (3) : 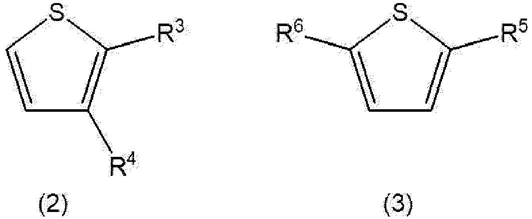 dans lesquelles chacun de R³, R⁴, R⁵ et R⁶ est indépendamment un atome d'hydrogène ; un groupe formyle ; un groupe (alkyle en C₁ à C₆)carbonyle ; un groupe (alcoxy en C₁ à C₆)carbonyle ; un atome d'halogène ; un groupe alkyle en C₁ à C₆ éventuellement substitué par un groupe hydroxy, un groupe amino, ou un groupe thiol ; ou un groupe alcoxy en C₁ à C₆ ; sous réserve que R³ et R⁴ ne soient pas des atomes d'hydrogène en même temps, et que R⁵ et R⁶ ne soient pas des atomes d'hydrogène en même temps.

7. Procédé selon la revendication 6, dans lequel le composé représenté par la formule (1) est un composé représenté par la formule (2).

8. Procédé selon la revendication 7, dans lequel l'un de R³ et R⁴ est un atome d'hydrogène, et l'autre est un groupe formyle ; un groupe (alkyle en C₁ à C₆)carbonyle ; un groupe (alcoxy en C₁ à C₆)carbonyle ; un atome d'halogène ; un groupe alkyle en C₁ à C₆ éventuellement substitué par un groupe hydroxy, un groupe amino, ou un groupe thiol ; ou un groupe alcoxy en C₁ à C₆.

9. Procédé selon la revendication 7, dans lequel l'un de R³ et R⁴ est un atome d'hydrogène, et l'autre est un groupe (alkyle en C₁ à C₆)carbonyle ou un groupe (alcoxy en C₁ à C₆)carbonyle.

10. Procédé selon la revendication 6, dans lequel le composé représenté par la formule (1) est un composé représenté par la formule (3).

11. Procédé selon la revendication 10, dans lequel chacun de R⁵ et R⁶ est indépendamment un groupe alkyle en C₁ à C₆.

12. Procédé selon la revendication 1, dans lequel le composé représenté par la formule (Ia) est choisi parmi
le 2-acétylthiophène,
le 2-thiophènecarboxylate de méthyle,
le 2-thiophènecarboxylate d'éthyle,
le 2-propionylthiophène,
le thiophène-3-carboxylate de méthyle,
le 3-chlorothiophène,
le 3-méthylthiophène-2-carboxaldéhyde,
le 2-propylthiophène,
le 2-(2-aminoéthyl)thiophène,
le 2-éthylthiophène,
le 2-chloro-3-méthylthiophène,
le 3-méthylthiophène,
le 2-thiophène-éthanol,
le 2,5-diméthylthiophène,
le 3-thiophèneméthanol,
le 2-thiophènecarboxaldéhyde,
le 3-acétyl-2,5-diméthylthiophène,
le 2-méthoxythiophène,
le 2-bromothiophène,
le 2-thiophèneméthanethiol,
le 2-pentylthiophène, et
le 3-méthylbenzo[b]thiophène.

13. Procédé selon la revendication 1, dans lequel le composé représenté par la formule (Ia) est choisi parmi
le 2-acétylthiophène,
le 2-thiophènecarboxylate de méthyle,
le 2-thiophènecarboxylate d'éthyle,
le 2-propionylthiophène,
le thiophène-3-carboxylate de méthyle, et
le 3-acétyl-2,5-diméthylthiophène.
